# EUROPEAN PATENT APPLICATION

(11) **EP 2 450 315 A1**
(43) Date of publication of application: **09.05.2012**
(21) Application number: 10793928.2
(22) Date of filing: 19.05.2010
(51) Int. Cl.: C03B 3/02, C03B 5/235

(54) **METHOD FOR MANUFACTURING MOLTEN GLASS, GLASS-MELTING FURNACE, GLASS ARTICLE MANUFACTURING DEVICE, AND GLASS ARTICLE MANUFACTURING METHOD**

(30) Priority: 29.06.2009 JP 2009154026
(71) Applicant: Asahi Glass Company, Limited, Tokyo 100-8405 (JP)
(72) Inventor: SAKAMOTO, Osamu, Tokyo 100-8405 (JP)
(74) Representative: Ehlich, Hendrik
(86) International application number: PCT/JP2010/058465
(87) International publication number: WO 2011/001757

(57) **Abstract**

The present invention provides a process for producing molten glass that is a process of producing molten glass from glass raw material particles and glass cullet pieces by an in-flight melting method; a glass melting furnace for carrying out the above process; an apparatus for producing glass products having the above melting furnace; and a process for producing glass products employing the above production process.

A glass melting furnace 10 having a glass raw material particle input portion disposed downwardly from a ceiling wall 18 of a melting vessel 12; an oxygen combustion burner 26 for forming a flame for heating falling glass raw material particles 32 to change to be liquid glass particles; a glass cullet piece input tube 36 for inputting glass cullet pieces 42 having a short diameter (A) of 0.5 mm<A<30 mm, that is disposed downwardly from the ceiling wall 18; and an oxygen combustion burner 38 for forming a flame 46 for changing falling glass cullet pieces 42 to be glass particles at least surfaces of which are liquidized.

## Description

### TECHNICAL FIELD

The present invention relates to a process for producing molten glass, which is a process of producing respective liquid glass particles from glass raw material particles and glass cullet pieces in a high temperature gas phase atmosphere, to produce molten glass; a glass-melting furnace for carrying out the production process; an apparatus for producing glass products employing the melting furnace; and a process for producing glass products using the above process.

### BACKGROUND ART

Patent Documents 1 and 2 each discloses as a glass-melting furnace for melting glass raw material particles in a high temperature gas phase atmosphere and accumulating them to produce a molten glass liquid, a glass-melting furnace having a glass raw material particle input portion and a heating means for forming a high temperature gas phase atmosphere for melting the glass raw material particles in the ceiling portion of the glass-melting furnace.

This glass-melting furnace is an apparatus for melting glass raw material particles, that are input from the glass raw material input portion into the inside of the furnace, in a high temperature gas phase atmosphere heated by a heating means, to produce liquid glass particles, accumulating the liquid glass particles in a bottom portion of the glass-melting furnace to form molten glass liquid, temporarily storing the molten glass liquid in the bottom portion of the glass-melting furnace, and discharging the molten glass liquid. Further, such a production process of molten glass is known as in-flight glass melting method. In this in-flight glass melting method, as compared with a conventional melting method using a Siemens type furnace, it is possible to reduce consumption energy in glass-melting step to be about one thirds to produce molten glass in a short time, and accordingly, it is possible to downsize a melting furnace, omit a regenerator, improve quality, reduce CO₂ and to shorten a time for changing glass type. Such an in-flight melting method of glass is attentioned as a technique for saving energy.

By the way, as the glass raw material particles input from the glass-raw material input portion, one comprising a mixture of glass raw materials and having a particle size of at most 1 mm, is commonly employed. Each particle of the glass raw material particles input into the glass-melting furnace is melted to be a liquid glass particle while it falls (flies) in a high temperature gas phase atmosphere, and such liquid glass particles fall downwardly and are accumulated in the bottom portion of the glass-melting furnace to form a molten glass liquid. The liquid glass particles produced from the glass raw material particles may be expressed as drops of molten glass. In order to produce the liquid glass particles from the glass raw material particles in the high temperature gas phase atmosphere in a short time, the particle size of the glass raw material particles has to be small as described above. Further, usually, each liquid glass particle produced from each glass raw material particle needs to be a particle having substantially the same glass composition.

Almost all of decomposed gas components, that are generated when the glass raw material particles become liquid glass particles, are discharged to the outside of the molten glass particles without being contained in the molten glass particles since both of the glass raw material particles and the liquid glass particles are small particles. Accordingly, there is little risk that bubbles are formed in the molten glass liquid produced by accumulating the liquid glass particles.

Meanwhile, the glass raw material particles are particles having substantially uniform components, and glass compositions of liquid glass particles produced from the glass raw material particles are uniform from one another. Since the difference of glass composition among the liquid glass particles is small, there is little risk that glass composition is different between portions of molten glass liquid produced by accumulation of a large number of the liquid glass particles. Accordingly, a homogenizing means for homogenizing the glass composition in molten glass liquid, that has been required in conventional glass-melting furnaces, is scarcely required in in-flight melting method. Even if a small amount of liquid glass particles are different from the rest of liquid glass particles in the glass composition, since the molten glass particles are small in the particle size, an inhomogeneous region of molten glass liquid, that is produced from the small amount of molten glass particles having different glass composition, is small and such a region is easily homogenized and disappears in a short time. Thus, with the in-flight melting method, it is possible to reduce heat energy required to homogenize molten glass liquid and to shorten a time required for homogenization.

The glass-melting furnace of Patent Document 1 has a plurality of arc electrodes and/or oxygen combustion nozzles as heating means for forming a high-temperature gas phase atmosphere, and a high-temperature gas phase atmosphere of at least 1,600°C is formed in the furnace by a thermal plasma arc formed by the plurality of arc electrodes and/or oxygen combustion flames formed by the oxygen combustion nozzles. By inputting glass raw material particles into the high-temperature gas phase atmosphere, the glass raw material particles are changed to liquid glass particles in the high temperature gas phase atmosphere. Further, as glass raw material particles employed in Patent Document 1, ones having a particle size of at most 0.5 mm (weight-averaged) are employed for the reason that they can be changed into liquid glass particles in a short time and dissipation of generated gases is easy. Further, from the viewpoints of cost increase for reduction of the particle size of the glass raw material particles and reduction of the glass composition variation among generated liquid glass particles, ones having a particle size of at least 0.01 mm (weight-averaged) are employed.

Meanwhile, the glass-melting furnace of Patent Document 2 has an oxygen burner attached downwardly from a ceiling wall of the glass-melting furnace as a heating means. To this oxygen burner, a gas supply line and a raw material supply line are connected so that a combustion-supporting gas having an oxygen concentration of at least 90 vol% and a glass raw material are supplied. Accordingly, with this glass-melting furnace, it is possible to form a downward flame by operation of the oxygen burner and supply glass raw material particles downwardly into the flame from the oxygen burner to produce liquid glass particles in the flame, and to accumulate the produced liquid glass particles in a furnace bottom right under the flame to form a molten glass liquid.

The molten glass of about 1,600°C produced by the glass-melting furnace of Patent Document 1 or 2 is supplied from the glass-melting furnace to a temperature adjusting vessel or a refining vessel, and is cooled to a temperature at which the glass is moldable (about 1,000°C in a case of soda lime glass). Then, this molten glass is supplied to a forming means of glass products such as a float bath, a fusion forming machine, a roll out forming machine, a blow forming machine or a press forming machine, and formed into glass products having various shapes. Then, the formed glass products are cooled to an approximate room temperature by an annealing means, and thereafter, subjected to a cutting step by a cutting means and/or other back-end steps as the case requires, to be fabricated into desired glass products.

By the way, in the production of molten glass, it is essential to use glass cullet pieces besides glass raw material. Accordingly, in order to practically use the in-flight melting method, an apparatus which can adapt glass cullet pieces is required.

For this reason, Patent Document 1 discloses a production process of molten glass, which is a process of pulverizing glass cullet pieces into particles having a particle size of within 5 µm, passing these particles through a high temperature gas phase atmosphere together with glass raw material particles, and accumulating them to obtain a molten glass liquid. Further, Patent Document 1 discloses a process of preliminarily heating glass cullet pieces, that have been preliminarily pulverized into an external size of about 5 mm, to about 700°C outside of a glass-melting furnace, directly inputting the glass cullet pieces into a molten glass, and heating the mixture.

### PRIOR ART DOCUMENTS

### PATENT DOCUMENTS

- Patent Document 1:: JP-A-2007-297239
- Patent Document 2:: JP-A-2008-290921

### DISCLOSURE OF INVENTION

### TECHNICAL PROBLEM

However, in the production process of molten glass of Patent Document 1 which discloses the technique of using glass cullet pieces in combination, there is a problem that in order to make glass cullet pieces pass through a high temperature gas phase atmosphere together with other glass raw material particles to melt them, the glass cullet pieces need to be pulverized into particles having a particle size of within 5 µm, and the pulverization is troublesome and time consuming. Further, in a case of glass cullet pieces having a particle size of more than 0.5 mm, the process requires a preliminary heating apparatus for preliminarily heating the glass cullet pieces to be about 700°C in another place and a supplying apparatus for supplying the preliminarily heated glass cullet pieces to the glass-melting furnace while maintaining the high temperature of the glass cullet pieces. Accordingly, there is a problem that the production equipment becomes complicated and the cost becomes high.

In the present invention, "glass cullet" means a glass cullet having substantially the same glass composition as that of glass products being the final products of the present invention. This glass cullet is usually produced in a step of producing glass products being the final products from a molten glass liquid formed in a melting furnace bottom portion in the present invention. However, the cullet is not limited thereto, and it may be a glass cullet produced in a production step of other glass products having substantially the same glass composition as that of the glass products being the final products of the present invention, or a glass cullet produced in a step of using glass products being the final products obtained by the present invention. The glass-melting furnace in the production step of other glass products, is not limited to a glass-melting furnace using in-flight melting method.

When the glass composition of a glass cullet is substantially the same as the glass composition of a glass produced from glass raw material particles, the glass composition of a molten glass, that is a mixture of liquid glass formed from molten glass cullet pieces and liquid glass formed from glass raw material particles, becomes uniform, thermal energy required for homogenization becomes small and a time required for homogenization is short. The glass composition of glass cullet and the glass composition of liquid glass particles formed from glass raw material particles are preferably the same. However, since the glass composition may slightly change (for example, e.g. evaporation of volatile glass components such as boron oxide) in the process that the molten glass liquid formed in the melting furnace bottom portion becomes glass products, such a slight difference of glass composition is acceptable.

Here, since a glass cullet is made of a material already forming a glass, heated glass cullet pieces are simply melted into liquid glass particles. On the other hand, glass raw material particles undergo chemical reactions such as a thermal decomposition of glass raw material (for example, thermal decomposition from metal carbonate to metal oxide) and a so-called vitrification consisting of a reaction and melt of a composition to be a glass, to be liquid glass particles. Although the glass raw material particles are different from glass cullet pieces in the mechanism of changing solid particles into molten glass particles, they are substantially the same in the glass composition of the produced liquid glass particles.

The present invention has been made under the circumstances, and it is an object of the present invention to provide a process for producing molten glass, which is a process of changing glass raw material particles into liquid glass particles and changing glass cullet pieces having a predetermined particle size into glass particles at least surfaces of which are melted, in a high temperature gas phase atmosphere, and accumulating both of the glass particles in a furnace bottom to obtain a molten glass liquid. Further, it is an object of the present invention to provide a process for producing glass products using the process for producing molten glass, a glass-melting furnace for producing the above molten glass, and an apparatus for producing glass products having the glass-melting furnace.

### SOLUTION TO PROBLEM

In order to achieve the above objects, the present invention provides a process for producing molten glass, which is a process of changing glass raw material particles into liquid glass particles in a gas phase atmosphere in a glass-melting furnace and accumulating the liquid glass particles in a bottom portion of the glass-melting furnace to obtain a molten glass liquid, the process comprising supplying glass cullet pieces having a short diameter (A) of 0.5 mm<A<30 mm into an in-furnace gas phase atmosphere outside a gas phase atmosphere wherein the glass raw material particles are changed into liquid glass particles, and making the glass cullet pieces into glass particles at least surfaces of which are liquidized in the gas phase atmosphere, and accumulating the glass particles at least surfaces of which are liquidized together with the liquid glass particles produced from the glass raw material particles, to obtain a molten glass liquid. The glass cullet pieces having a short diameter (A) are preferably screened by the following method. Namely, the glass cullet pieces of the present invention is one remaining on a sieve having a mesh-opening of 0.5 mm and passing through a sieve having a mesh-opening of 30 mm. It is sufficient that the sieve is one commonly used for screening glass cullet pieces, and it is one made of a metal and having openings. This feature is common to glass cullet pieces of the present invention.

By the present invention, it is possible to input glass cullet pieces, that do not require pulverization, into a glass-melting furnace together with glass raw material particles without requiring preliminarily heating, to produce molten glass.

Further, the glass particles at least surfaces of which are liquidized, that are produced by heating glass cullet pieces in an in-furnace gas phase atmosphere, are preferably totally molten glass particles, that are particles made of totally liquid glass. By heating glass cullet pieces in an in-furnace gas phase atmosphere to produce glass particles at least surfaces of which are liquidized, it is possible to reduce temperature drop of molten glass liquid even if the input amount of glass cullet pieces is increased.

It is sufficient that the heated glass cullet pieces become glass particles at least surfaces of which are melted in the gas phase atmosphere, and it is not necessary that they become totally liquid glass particles in the gas phase atmosphere. In order to further reduce temperature drop of molten glass liquid even if the input amount of glass cullet pieces is increased, it is preferred that the glass cullet pieces become particles of totally liquid glass in the gas phase atmosphere. Hereinafter, liquid glass particles produced from the glass raw material particles are referred to as liquid glass particles (a), and glass particles produced from glass cullet pieces and at least surfaces of which are liquidized are also referred to liquid glass particles (b).

Further, in order to achieve the above objects, the present invention provides a glass-melting furnace for changing glass raw material particles into liquid glass particles in a gas phase atmosphere in the glass-melting furnace, accumulating the liquid glass particles to obtain a molten glass liquid and discharging the molten glass liquid;
the furnace comprising a glass raw material particle input portion disposed downwardly from a furnace wall portion in the upper portion of the glass-melting furnace;
a glass cullet piece input portion disposed downwardly from a furnace wall portion in the upper portion of the glass-melting furnace for inputting glass cullet pieces having a short diameter (A) of 0.5 mm<A<30 mm;
a heating means for forming a first gas phase portion under the glass raw material particle input portion in the glass-melting furnace for changing the glass raw material particles into liquid glass particles;
a heating means for forming a second gas phase portion under the glass cullet piece input portion in the glass-melting furnace for melting the glass cullet pieces into glass particles at least surfaces of which are melted;
a furnace bottom portion for accumulating the above two types of glass particles to form a molten glass liquid; and
a discharge portion for discharging the molten glass liquid. The glass cullet pieces of the present invention in this case are preferably ones remaining on a sieve having a mesh-opening of 0.5 mm and passing through a sieve having a mesh-opening of 30 mm. The glass cullet piece input portion has a passage for introducing glass cullet pieces having such a size from the outside of the furnace through the furnace wall into the inside of the furnace.

In the glass-melting furnace, the first gas phase portion means an in-furnace gas phase atmosphere portion wherein the glass raw material particles become liquid glass particles, and the second gas phase portion means a gas phase atmosphere portion that is an in-furnace gas phase atmosphere outside the first gas phase portion, wherein the glass cullet pieces become glass particles at least surfaces of which are liquidized. Namely, the first gas phase portion is a region wherein the glass raw material particles become liquid glass particles (a), and the second gas phase portion is a region wherein the glass cullet pieces are heated so that their surfaces are liquidized to be liquid glass particles (b).

The present invention relates to a glass-melting furnace for producing molten glass by using glass raw material particles and glass cullet pieces in combination, which is a glass-melting furnace comprising a glass raw material particle input portion, glass cullet piece input portion, a heating means for forming the first gas phase portion, a heating means for forming the second gas phase portion, a furnace bottom portion and a discharge portion. In the glass-melting furnace, at least one first gas phase portion and at least one second gas phase portion are formed by heating means for forming the gas phase portions. In the first gas phase portion, the glass raw material particles become liquid glass particles (a) and in the second gas phase portion, glass cullet pieces become liquid glass particles (b). Into the first gas phase portion, glass raw material particles are supplied from the glass raw material particle input portion and into the second gas phase portion, glass cullet pieces are supplied from the glass cullet piece input portion. The glass raw material particle input portion and the glass cullet piece input portion are each disposed downwardly from the furnace wall portion in the upper portion of the glass-melting furnace, and the glass raw material particles and the glass cullet pieces are separately supplied from the outside of the furnace through the upper furnace wall portion to the respective gas phase portions. The liquid glass particles (a) formed in the first gas phase portion and the liquid glass particles (b) formed in the second gas phase portion are accumulated in the furnace bottom portion to be molten glass liquid. The molten glass liquid is temporarily stored in the furnace bottom portion, and appropriately discharged through a discharge portion to the outside of the melting furnace. Here, the furnace wall portion in the upper portion of the glass-melting furnace means a ceiling portion of the glass-melting furnace and a portion of a side wall within 1 m from the inner wall of the ceiling portion.

When a plurality of the first gas phase portions are present in the furnace, the respective first gas phase portions are preferably formed by respective gas phase heating means. The second gas phase portion is formed by a gas phase heating means different from the gas phase heating means for forming the first gas phase portion. When a plurality of the second gas phase portions are present in the furnace, the respective second gas phase portions are preferably formed by respective gas phase heating means.

With respect to the size of the glass cullet pieces, the particle size is define so that the glass cullet pieces can be input into the glass-melting furnace without pulverization and preheating. Namely, the short diameter (A) of the glass cullet pieces is defined to be 0.5 mm<A<30 mm. Namely, when glass cullet pieces having a short diameter (A) of at most 0.5 mm is employed, pulverization is required, and when ones having that of at least 30 mm are employed, preheating is required. In the present invention, glass cullet pieces having such a short diameter (A) are input from the glass cullet piece input portion into the second gas phase portion in the furnace, to heat the glass cullet pieces during they are falling in the second gas phase portion, thereby to produce glass particles at least of surfaces of which are liquidized.

Accordingly, by the glass-melting furnace of the present invention, it is possible to input glass cullet pieces, that do not require pulverization, together with glass raw material particles into a glass-melting furnace without preheating, to melt them. Accordingly, it is possible to use glass raw material particles and glass cullet pieces in combination, and accordingly, the glass-melting furnace is suitable as a large-scale melting furnace for producing at least tens of tons or at least hundreds of tons of glass products per day.

Further, in the glass-melting furnace of the present invention, the first gas phase portion and the second gas phase portion are heated by respective heating means. The heating means for forming each gas phase portion is preferably at least one selected from an oxygen combustion burner for producing oxygen combustion flame, and a multi-phase arc plasma generation apparatus constituted by at least one pair of electrodes for producing thermal plasma.

In the present invention, a high temperature atmosphere of about 2,000°C can be formed in the case of oxygen combustion flame by the oxygen combustion burner, a high temperature atmosphere of from 5,000 to 20,000°C can be formed in the case of thermal plasma. Accordingly, it is possible to change the glass raw material particles falling in the first gas phase portion into liquid glass particles (a) in a short time, and further, it is possible to suitably heat glass cullet pieces to be liquid glass particles (b). Here, the oxygen combustion burner and the pair of electrodes may be disposed alone or they may be used in combination. Further, as the oxygen combustion burner to be employed for forming the first gas phase portion, a burner integrated with the glass raw material particle input portion may be employed. Meanwhile, as the oxygen combustion burner to be employed for forming the second gas phase portion, since glass cullet pieces are relatively large particles, an oxygen combustion burner provided separately from the glass cullet piece input portion is preferred. The glass cullet piece input portion and the oxygen combustion burner provided separately from each other, are each provided closely to the furnace wall so that the input glass cullet pieces fall through a flame formed by the oxygen combustion burner or a high temperature atmosphere adjacent to the flame (that is the second gas phase portion).

Further, in the glass-melting furnace of the present invention, when the heating means for forming the second gas phase portion is the oxygen combustion burner, the oxygen combustion burner is preferably obliquely disposed so that the angle (θ) of the flame direction to the downward glass cullet piece input axis in the glass cullet piece input portion becomes 1°≦θ≦75°.

In the present invention, when the oxygen combustion burner is disposed at an angle of 1°≦θ≦75° to the glass cullet piece input axis so as to blow a flame against the glass cullet piece input axis being the vertical axis, the glass cullet pieces falling from the glass cullet piece input portion along the glass cullet piece input axis pass through the flame efficiently.

Further, in the glass-melting furnace of the present invention, the second gas phase portion is preferably formed by a plurality of heating means disposed around the glass cullet piece input portion in the ceiling portion being the furnace wall portion in the upper portion. As the plurality of heating means disposed around the glass cullet piece input portion, particularly, oxygen combustion burners are preferred.

With the construction wherein a plurality of heating means are disposed around the glass cullet piece input portion, each of the glass cullet pieces falling through the second gas phase portion is efficiently heated by high temperature generated by the plurality of heating means, whereby each piece is sufficiently heated to have a surface temperature of at least 1,000°C and tends to be a totally liquid glass particle having a viscosity of at most 1,000 Pa·s. There is no need of further heating the glass cullet pieces to be a high temperature to form liquid glass particles having a high temperature equivalent to the temperature of the liquid glass particles (a). For example, there is no need of producing liquid glass particles having a temperature of, for example, at least 1,400°C equivalent to the temperature of the liquid glass particles (a) or the molten glass liquid formed by accumulating the particles, and having a viscosity of at most 100 Pa·s. However, by making the temperature of the liquid glass particles (b) close to the temperature of the liquid glass particles (a), the temperature of the liquid glass particles (b) becomes close to the temperature of the molten glass liquid, whereby inhomoginity in the temperature of molten glass liquid due to mixture of the liquid glass particles (b) can be reduced to improve homogeneity of the molten glass liquid.

Further, in the glass-melting furnace of the present invention, in the construction for forming the second gas phase portion by the plurality of heating means, the heating means are preferably disposed concentrically around the glass cullet piece input portion with a predetermined interval.

With the above construction, it is possible to uniformly heat each of the glass cullet pieces falling in the second gas phase portion by the concentrically disposed heating means. Accordingly, it is possible to make most of the glass cullet pieces to be liquid glass particles (b) that are totally liquid, to further improve the homogeneity of the molten glass liquid.

Further, in the glass-melting furnace of the present invention, the glass raw material particle input portion and the glass cullet piece input portions are preferably disposed at different positions along the flow direction of the molten glass liquid along which the molten glass liquid formed in the furnace bottom portion flows toward the discharge portion.

Further, in the glass-melting furnace of the present invention, a plurality of the glass raw material particle input portions are disposed along a direction substantially perpendicular to the flow direction of the molten glass liquid along which the molten glass liquid formed in the furnace bottom portion flowed toward the discharge portion.

Further, in the glass-melting furnace of the present invention, it is preferred that the plurality of the glass raw material particle input portions are disposed along a direction substantially perpendicular to the flow direction of the molten glass liquid so as to form a column of the plurality of the glass raw material particle input portions, and a plurality of such columns are disposed at different positions along the flow direction of the molten glass liquid.

Further, in the glass-melting furnace of the present invention, it is preferred that one or a plurality of the glass cullet piece input portions are disposed along a direction substantially perpendicular to the flow direction of molten glass liquid along which the molten glass liquid formed in the furnace bottom portion flows toward the discharge portion, a plurality of the glass cullet piece input portions are disposed along the flow direction of the molten glass liquid, and that the glass cullet piece input portions are disposed along the flow direction of the molten glass liquid at positions different from the position of the glass raw material particle input portion.

Further, the present invention is an invention of melting furnace suitable to be used as a large scale melting furnace achieving production of glass products of at least hundreds of tons per day, besides the invention of employing glass cullet pieces having a predetermined particle size. This melting furnace has a characteristic of arrangement of glass raw material particle input portion and the glass cullet piece input portion. The arrangement of the glass raw material particle input portion and the glass cullet piece input portion, equals to the arrangement of the first gas phase portion and the second gas phase portion in the in-furnace atmosphere.

In order to achieve the above mass-production type melting furnace, it is necessary to increase the input amount of glass raw material particles and glass cullet pieces. However, in a melting furnace having one first gas phase portion and one second gas phase portion, heating capacity of heating means for forming each gas phase portion is limited. Accordingly, when the amount of glass raw material particles or the glass cullet pieces to be supplied to each gas phase portion is increased, heating energy per a unit amount of glass raw material particles or the glass cullet particles decreases to decrease the temperature of the liquid glass particles (a) or the liquid glass particles (b) produced, and as a result, there is a risk that the temperature of the molten glass liquid drops. Further, since the heating means is also a heating means for heating the inside of the melting furnace to prevent temperature drop of the molten glass liquid in the furnace bottom to maintain a predetermined temperature. Accordingly, when the proportion of heat energy to be used for forming the above liquid glass particles increases, it may become difficult to maintain the temperature in the furnace.

To cope with this problem, in an embodiment of the present invention, a plurality of the first gas phase portions and a plurality of the second gas phase portions are formed in the melting furnace. With this construction, without increasing the amount of glass raw material particles or the glass cullet pieces for each gas phase portion, the input amounts of glass raw material particles and the glass cullet pieces are increased. By this method, while the heating efficiency of the glass raw material particles or the glass cullet pieces is maintained, drop of the in-furnace temperature or the temperature of the molten glass liquid is prevented to achieve a mass-production type melting furnace.

Further, the liquid glass particles (a) is different from the liquid glass particles (b) in the thermal history, they are usually slightly different in the quality. A molten glass liquid formed by two types of these liquid glass particles, that are different in quality, becomes finally a homogenous molten glass liquid. In order to efficiently produce homogenous molten glass liquid, it is preferred to efficiently mix two types of liquid glass particles, that are different in quality, at a time of accumulating the liquid glass particles.

Under the circumstances, in an embodiment of the present invention, the first gas phase portion and the second gas phase portion are arranged in a staggered layout. By this method, mixture of both types of the liquid glass particles accumulated in the furnace bottom is smoothly carried out, to reduce inhomoginity of the molten glass liquid at the time of accumulation of the liquid glass. Further, by arranging a plurality of columns of the first gas phase portion and the second gas phase portion arranged in the staggered form, it is possible to further reduce the inhomoginity of the molten glass liquid at the time of accumulation of the liquid glass.

Further, in order to achieve the above object, the present invention provides an apparatus for producing glass products, comprising the glass-melting furnace, a forming means for forming a molten glass, which is provided on the downstream side of the discharge portion of the glass-melting furnace, and an annealing means for annealing the formed glass.

Further, in order to achieve the above object, the present invention provides a process for producing glass products, comprising a glass melting step of producing molten glass by the melting method of glass, a step of forming the molten glass and a step of annealing the formed glass.

### ADVANTAGEOUS EFFECT OF INVENTION

As described above, by the process of producing molten glass and the glass-melting furnace of the present invention, it is possible to input glass cullet pieces into a glass-melting furnace without requiring pulverization together with glass raw material particles without preheating, to melt them.

Further, in the apparatus for producing glass products and the process for producing glass products of the present invention, it becomes possible to melt glass raw material particles and glass cullet pieces in a large-scale melting furnace by the glass-melting furnace and the process for producing the molten glass of the present invention, whereby mass production of glass products is possible.

### BRIEF DESCRIPTION OF DRAWINGS

Fig. 1 is a plan view of a glass-melting furnace of a first embodiment constituting an apparatus for producing glass products of the present invention.
Fig. 2 is a side cross-sectional view of the glass-melting furnace shown in Fig. 1.
Fig. 3 is a plan view of a substantial part of a melting vessel showing a first form of a modified arrangement of oxygen combustion burners.
Fig. 4 is a plan view showing a substantial part of the melting vessel showing a second form of a modified arrangement of the oxygen combustion burners.
Fig. 5 is a plan view showing a substantial part of the melting vessel showing a third form of a modified arrangement of the oxygen combustion burners.
Fig. 6 is a plan view showing a substantial part of the melting vessel showing a fourth form of a modified arrangement of the oxygen combustion burners.
Fig. 7 is a plan view showing a substantial part of the melting vessel showing a first form of the arrangement of the glass raw material particle input portions and the glass cullet piece input portions.
Fig. 8 is a plan view showing a substantial part of the melting vessel showing a second form of the arrangement of the glass raw material particle input portions and the glass cullet piece input portions.
Fig. 9 is a plan view showing a substantial part of the melting vessel showing a third form of the arrangement of the glass raw material particle input portions and the glass cullet piece input portions.
Fig. 10 is a plan view showing a substantial part of the melting vessel showing a fourth form of the arrangement of the glass raw material particle input portions and the glass cullet piece input portions.
Fig. 11 is a plan view showing a substantial part of the melting vessel showing a fifth form of the arrangement of the glass raw material particle input portions and the glass cullet piece input portions.
Fig. 12 is a flow chart showing steps of the process for producing glass products.

### DESCRIPTION OF EMBODIMENTS

Now, preferred embodiments of the glass-melting furnace, the process for producing molten glass, the apparatus for producing glass products and the process for producing glass products of the present invention will be described with reference to attached Drawings.

In the illustrated glass-melting furnace, heating means for forming a first and second gas phase portions comprise oxygen combustion burners. The first phase portions and the second phase portion are each constituted by a flame of oxygen combustion burner and a high temperature portion in the vicinity of the flame.

A glass raw material particle input portion for supplying glass raw material particles to the first gas phase portion is integrated with an oxygen combustion burner, and in the vicinity of the outlet of the oxygen combustion burner, a tube for supplying a combustion gas, a tube for supplying oxygen and a tube for supplying glass raw material particles are coaxially constructed. This combination of the glass raw material particle input portion and the oxygen combustion burner is referred to as a first set.

Meanwhile, a glass cullet piece input portion and an oxygen combustion burner are separate from each other, and a tube for supplying glass cullet pieces to a second gas phase portion and the oxygen combustion burner are disposed in a furnace wall portion in the upper portion so as to be close to each other. This combination of the glass cullet piece input portion and the oxygen combustion burner is referred to as a second set.

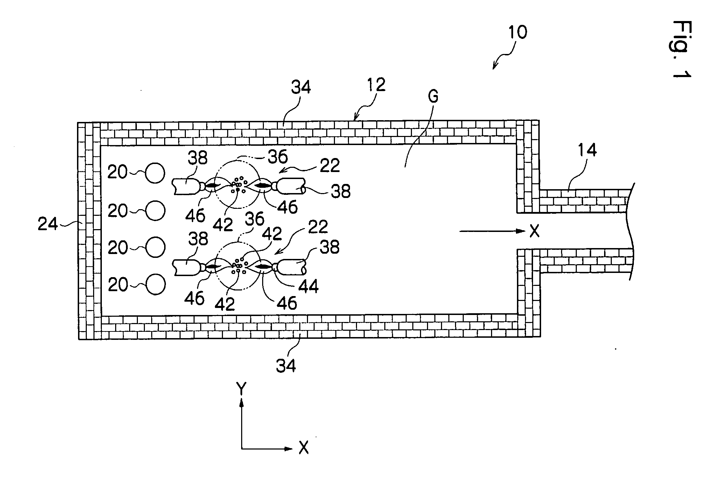

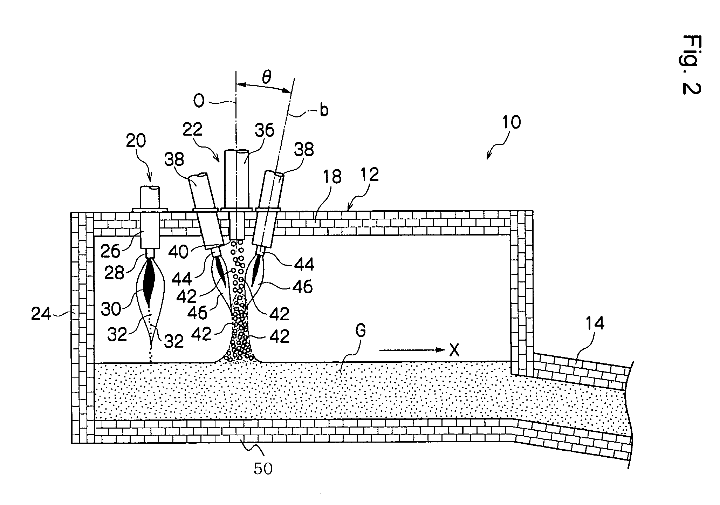

Fig. 1 is a plan view of a glass-melting furnace 10, except for a ceiling wall, of a first embodiment constituting an apparatus for producing glass products of the present invention, and Fig. 2 is a side cross-sectional view of the glass-melting furnace 10.

The glass-melting furnace 10 have a melting vessel 12 on the upstream side and an output port 14 for discharging molten glass, and the melting vessel 12 and the output port 14 are constituted by known refractory bricks. Further, on a ceiling wall 18 being a furnace wall portion in the upper portion of the melting vessel 12, four first sets 20, 20 · · · two second sets 22, 22 are disposed, whereby four first gas phase portions and two second gas phase portions are formed in the in-furnace gas phase atmosphere. The oxygen combustion burner in each set is disposed through the ceiling wall 18 so that each flame is formed downwardly. In a furnace bottom portion 50 and the outlet 14 in the bottom portion of the melting vessel 12, a molten glass liquid G is stored, and the furnace is constituted so that the molten glass liquid G produced in the melting vessel 12 flows through the outlet 14 to the downstream side. The furnace bottom portion 50 is constituted by known refractory bricks.

Accordingly, in this melting vessel 12, the first sets 20, 20 · · · are disposed on the upstream side of the molten glass liquid G, and the second sets 22, 22 are disposed on the downstream side of the first sets. Further, the first sets 20, 20 · · · are disposed with a predetermined distance along a direction Y substantially perpendicular to a flow direction X of the molten glass liquid G, and the second sets 22, 22 are also disposed with a predetermined distance along the direction Y substantially perpendicular to the flow direction X of the molten glass liquid G. These first sets 20, 20 · · · and the second sets 22, 22 are disposed on the upstream wall face 24 side of the melting vessel. Namely, glass raw material particles dropped from the first sets 20 and glass cullet pieces dropped from the second sets 22 become liquid glass particles in respective flames of oxygen combustion burners, accumulated in a furnace bottom portion on the upstream side of the melting vessel 12, to be a molten glass liquid G. Further, these second sets 22, 22 are disposed between two pairs of the first sets 20, 20 · · · that are disposed on both sides and inside of the second sets when they are observed from the flow direction of the molten glass G.

Here, a case where the first set is not disposed from the ceiling portion but from a side wall in the upper portion of the glass-melting furnace, is also within the scope of the present invention. In the case where the first set is provided on the side wall, the first set is provided on the side wall at a height within 1 m in the vertical direction from the inner wall of the ceiling portion of the glass-melting furnace. This is because if the first set is provided at a position exceeding 1 m in the vertical direction from the inner wall of the ceiling portion of the glass-melting furnace, the vertical distance from the molten glass liquid surface becomes so small that the angle of the first set to the horizontal direction becomes small, and accordingly, the glass raw material particles are blown against an opposed wall face, whereby corrosion of the wall face and contamination of glass caused by the corrosion occur. The first set is preferably provided at a height within 80 cm, more preferably at a height within 60 cm in the vertical direction from the inner wall of the ceiling portion of the glass-melting furnace.

As the first set 20, an oxygen combustion burner 26 integrated with the glass raw material particle input portion is employed.

The oxygen combustion burner 26 is an oxygen combustion burner wherein supply nozzles of a raw material, a fuel and a combustion supporting gas are appropriately arranged, that is known as a burner for heating inorganic powder. From a leading edge nozzle 28 of the oxygen combustion burner, a flame 30 is blown downwardly and glass raw material particles 32 is supplied from the glass raw material particles supply nozzle by gas or mechanical conveyance into the flame 30 (that is the first gas phase portion). By this method, it is possible to securely change the glass raw material particles 32 into liquid glass particles (a) in a short time. Here, although not shown, glass raw material particle supply line for supplying glass raw material particles to the glass raw material particle supply nozzle, a fuel supply line for supplying a fuel to the fuel supply nozzle, and a gas supply line for supplying a combustion support gas to the combustion support gas supply nozzle for combustion, are connected to the oxygen combustion burner.

Thus, when the oxygen combustion burner 26 integrated with the glass raw material particle input portion is employed, since the oxygen combustion burner 26 functions also as the glass raw material particle input portion, it is not necessary to provide a glass raw material input portion separately. However, a glass raw material particle input portion for inputting glass raw material particles to the flame 30 of the oxygen combustion burner 26, may be separately provided so as to be adjacent to the oxygen combustion burner 26.

Here, the gas phase heating means for forming the first gas phase portion is not limited to the oxygen combustion burner 26, and a multiphase arc plasma generating apparatus constituted by at least one pair of electrodes for generating thermal plasma, may be provided on a ceiling wall 18 of a melting vessel 12, or both of the oxygen combustion burner 26 and the multiphase arc plasma generating apparatus may be provided in the melting vessel 12. Further, the temperatures of the flame 30 of the oxygen combustion burner 26 and the thermal plasma are preferably set to be at least 1,600°C higher than the melting temperature of silica sand in order to quickly vaporize and dissipate gas components contained in the glass raw material particles 32 and to promote vitrification reaction. By this method, the glass raw material particles 32 input in the furnace are quickly vaporized and dissipated by the flame 30 and/or the thermal plasma and by the heat of high temperature, they become liquid glass particles and fall on the bottom portion of the melting vessel 12 to be a molten glass liquid. Then, the liquid state of the molten glass liquid formed by accumulation of the liquid glass particles is maintained because it is continuously heated by the flame 30 and/or the thermal plasma. Here, the central temperature of the flame 30 is about 2,000°C in the case of oxygen combustion, and it is from 5,000 to 20,000°C in the case of thermal plasma.

The average particle size (weight-averaged) of the glass raw material particles is preferably from 30 to 1,000 µm. More preferably, glass raw material particles having an average particle size (weight-averaged) within a range of from 50 to 500 µm are employed, and glass raw material particles within a range of from 70 to 300 µm are much more preferred. The average particle size (weight-averaged) of the liquid glass particles (a) that are produced by melting the glass raw material particles, is about 80% of the average particle size of glass raw material particles in most cases.

Meanwhile, the second set 22 is constituted by a glass cullet piece input tube (glass cullet piece input portion) 36 and two oxygen combustion burners (gas cullet pieces heating portions) 38, 38.

The glass cullet piece input tube 36 is vertically disposed through the ceiling wall being a wall face portion in the upper portion of the glass-melting furnace, and glass cullet pieces 42, 42 · · · are dropped through an input port 40 formed at the lower end of the glass cullet piece input tube 36. To the glass cullet piece input tube 36, a glass cullet piece conveying system (not shown) for conveying the glass cullet pieces 42, 42 · · · by gas conveyance or mechanical conveyance, is connected to convey the glass cullet pieces 42, 42 · · · having a size described later, to the glass cullet piece input tube 36. Further, the material of the glass cullet piece input tube 18, 18 · · · may, for example, be a metal or ceramics that are water-cooled.

Here, a case where the second set is provided not on the ceiling portion but on a side wall in the upper portion of the glass-melting furnace, is also within the scope of the present invention. In the case where the second set is provided on a side wall, the second set is provided at a height within 1 m in the vertical direction from the inner wall of the ceiling portion of the glass-melting furnace. This is because when the second set is provided at a position exceeding 1 m in the vertical direction from the inner wall of the ceiling portion of the glass-melting furnace, the vertical distance from the molten glass liquid surface become so small that the angle to the horizontal direction becomes small, whereby the glass cullet pieces are blown against an opposed wall face to cause damage and corrosion of the wall face and contamination of glass is caused by the corrosion. The second set is preferably provided at a height within 80 cm, more preferably at a height within 60 cm in the vertical direction from the inner wall of the ceiling portion of the glass-melting furnace.

The oxygen combustion burner 38 is an oxygen combustion burner wherein fuel and oxygen supply nozzles are appropriately arranged, that is known as a burner for oxygen combustion heating. A flame 46 is blown obliquely downwardly from the nozzle 44 against falling glass cullet pieces 42, 42, · · · so that the contact time between the flame 46 (that is the second gas phase portion) and the glass cullet pieces 42, 42 · · · is maintained for a long time. By this method, the glass cullet pieces 42, 42 · · · are securely heated in the second gas phase portion. The glass cullet pieces 42 heated by the flame 46 are heated to be about from 1,000 to 1,800°C, although depending on the amount of the glass cullet pieces 42 input, and usually, at least the surfaces are melted to be liquid glass particles (b) and the particles fall on a molten glass liquid G. Here, although not shown, a fuel supply line for supplying a fuel to the fuel supply nozzle and a gas supply line for supplying a combustion support gas to a combustion support gas supply nozzle for combustion, are connected to the oxygen combustion burner 38.

Further, the oxygen combustion burners 38, 38 are disposed on the upstream side and the downstream side across the glass cullet piece input tube 36 with a predetermined distance. Namely, nozzles 44, 44 of the oxygen combustion burners 38, 38 are disposed around the glass cullet piece input tube 36. Further, the oxygen combustion burners 38, 38 and the glass cullet piece input tube 36 are disposed in line when they are observed from the flow direction X of the molten glass liquid G.

Further, the oxygen combustion burners 38, 38 are obliquely disposed so that the angle (θ) between the glass cullet piece input axis (O in Fig. 2) by the glass cullet piece input tube 36 and the flame direction (B) becomes 1°≦θ≦75°. Thus, since the oxygen combustion burner 38 is disposed at an angle of 1°≦θ≦75° to the glass cullet input axis (O) so as to blow the flame 46 to the glass cullet input axis (O) being the vertical axis, glass cullet pieces 42, 42 · · · falling from the glass cullet piece input tube 36 along the glass cullet input axis (O) efficiently pass through the flame 46. Here, the horizontal distance between a nozzle 44 in the leading edge portion of the oxygen combustion burner 38 and the input port 40 of the glass cullet piece input tube 36, is appropriately adjusted for the purpose of letting the falling glass cullet pieces 42, 42 · · · efficiently pass through the flame 46 and according to the capacity of the oxygen combustion burner 38. For example, in a case where the falling height of the glass cullet pieces can be within a range of from 1 to 3 m, the oxygen combustion burner is preferably disposed at an angle of 10°≦θ≦30° to the glass cullet piece input axis (O). In this construction, it is possible to increase the contact time between the flame of the oxygen combustion burner and the glass cullet pieces, and it is possible to melt more deep inside of each glass cullet piece even when the glass cullet piece is large.

Here, in the same manner as the oxygen combustion burner 26, instead of the oxygen combustion burner 38, a multiphase arc plasma generation apparatus constituted by at least one pair of electrodes for generating thermal plasma may be provided on a ceiling wall 18 of the melting vessel 12. Further, both of the oxygen combustion burner 38 and the multiphase arc plasma generating apparatus may be provided in the melting vessel 12. The temperature of the flame 46 of the oxygen combustion burner 38 and the temperature of the thermal plasma are the same as the temperatures described above.

Next, the function of the glass-melting furnace constructed as describe above will be described.

The glass-melting furnace of this embodiment is a melting furnace for melting glass raw material particles 32 and glass cullet pieces 42 in combination. A first gas phase portion is formed by four oxygen combustion burners 26, 26 · · · , and the glass raw material particles 32 are changed into liquid glass particles in the first gas phase portion. Namely, from the oxygen combustion burners 26, 26 · · · , glass raw material particles 32, 32 · · · are input into the furnace, and the falling glass raw material particles are heated by flames 30, 30 · · · of the oxygen combustion burners 26, 26 · · · to produce liquid glass particles. Liquid glass particles (a) formed from the glass raw material particles 32, 32 · · · fall downwardly and they are accumulated in the furnace bottom portion 50 to be a molten glass liquid G, and the molten glass liquid G is temporarily stored in the furnace bottom portion 50. It is not essential that the liquid glass particles (a) reach the furnace bottom portion 50 or a surface of the molten glass liquid G as separate particles. Two or more liquid glass particles (a) may be fusion-bonded before reaching the furnace bottom portion 50 or the surface of the molten glass liquid G.

Then, the particle size of the glass cullet pieces 42 input from the glass cullet piece input tube 36 is defined so as to allow input of the pieces into the melting vessel 12 without pulverization and preheating. Namely, the short diameter (A) of the glass cullet is defined as 0.5 mm<A<30 mm. The glass cullet pieces having a short diameter (A) are screened by the following method. Namely, the glass cullet pieces of the present invention are ones remaining on a sieve having a mesh-opening of 0.5 mm and passing through a sieve having a mesh-opening of 30 mm. Namely, when the short diameter (A) is at most 0.5 mm, the glass cullet pieces can be input and melted at the same time of other glass raw materials, but in general, in order to prepare cullet pieces uniformly having a short diameter (A) of at most 0.5 mm, a pulverization step is essential, and such a method is problematic in the cost and mass productivity. Here, when the short axis (A) exceeds 0.5 mm, the cullet pieces having a uniform particle size are procurable from ordinary market. On the other hand, when the short diameter (A) is at least 30 mm, such cullet pieces cannot be sufficiently heated by an oxygen combustion burner in some cases, and preheating becomes necessary. The short diameter (A) is preferably 1 mm<A<20 mm from the viewpoint of procuring the glass cullet pieces from ordinary market. The short diameter (A) is more preferably 2 mm<A<10 mm from the viewpoint of procuring the glass cullet pieces from ordinary market.

In this embodiment, glass cullet pieces 42 having such a short diameter (A) are input from the glass cullet piece input tube 36 into the furnace, and the falling glass cullet pieces 42, 42 · · · are heated in the second gas phase portion to be liquid glass particles (b). The second gas phase portion is formed by flames 46, 46 of the oxygen combustion burners 38, 38, and the glass cullet pieces are heated in the flames 46, 46 to be liquid glass particles (b) and fall downwardly.

At least two of the liquid glass particles (b) may be fusion-bonded before reaching a surface of molten glass liquid G, and the fusion-bonded liquid glass particles (b) may reach the molten glass liquid G. Since the liquid glass particles (b) are relatively large particles, falling liquid glass particles (b) tend to contact with each other, and a plurality of liquid glass particles (b) contact to be fusion-bonded to form further large liquid glass particles or agglomerations. Further, a large number of liquid glass particles (b) may form a single stream of fluid before reaching the molten glass liquid G. When the amount of glass cullet pieces 42 input from each glass cullet piece input tube 36 per a unit time is large, such fusion-bonding of liquid glass particles (b) tends to occur.

Here, it is preferred that the glass cullet pieces 42 are completely liquidized by the oxygen combustion burners 38, 38 during fall of the glass cullet pieces 42, but since the glass cullet pieces 42 are by far larger than the glass raw material particles 32 being fine particles in the size, it is difficult to completely liquidize inside of the glass cullet pieces 42 in some cases. Accordingly, in such a case, liquid glass particles (b) inside of which is not completely liquidized, reach the molten glass liquid G. However, even in this case, since the molten glass liquid G is heated by heat of the oxygen combustion burners 26, 26 · · · and the oxygen combustion burners 38, 38 and radiation heat from the furnace body, an inhomogeneous portion in the molten glass liquid formed from liquid glass particles (b) inside of which is not completely liquidized, is homogenized in a short time to form a uniform molten glass liquid G.

Further, since the oxygen combustion burner 38 not only preheats the glass cullet pieces 42 alone but also heats the molten glass liquid G in the melting vessel 12, the oxygen combustion burner 38 is completely different from a preheating apparatus for glass cullet pieces disposed outside the furnace.

Accordingly, in the glass-melting furnace of this embodiment, it is possible to input the glass raw material particle 32 and the glass cullet pieces 42 into the melting vessel 12 and melt them without requiring pulverization and preheating of the glass cullet pieces 42. Accordingly, since it is possible to use the glass raw material particles 32 and the glass cullet pieces 42 in combination, the melting furnace is suitable as a large-scale melting furnace suitable for production of at least tens of tons of glass products per day and hundreds of tons of glass products per day.

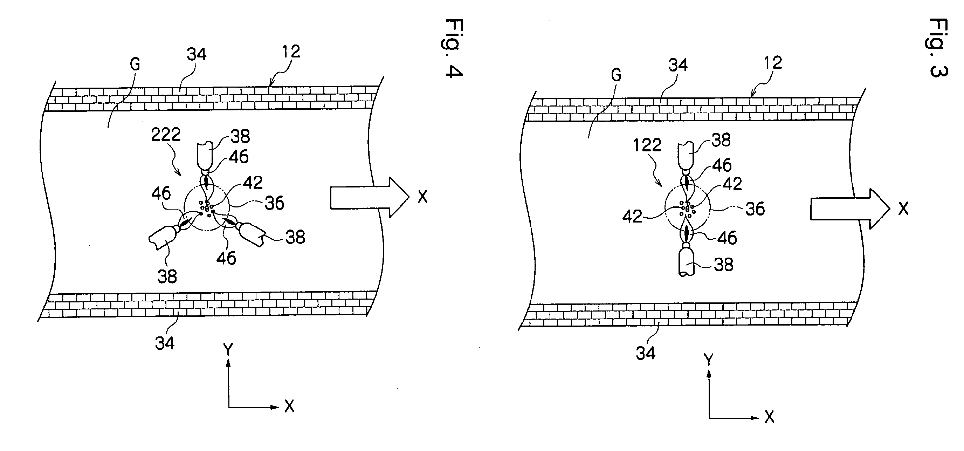

Fig. 3 is a plan view of a substantial part of the melting vessel 12 except for ceiling wall, which shows a first modified form of the arrangement of oxygen combustion burners 38, 38 of the second set.

As shown in the Figure, the oxygen combustion burners 38, 38 of the second set 122 are arranged on both sides of the glass cullet piece input tube 36, that is arranged with a predetermined distance along a direction Y substantially perpendicular to the flow direction X of the molten glass liquid G. Further, the oxygen combustion burners 38, 38 and the glass cullet piece input tube 36 are arranged in a straight line when they are observed from a direction Y substantially perpendicular to the flow direction. Here, the angle of the flame direction of the oxygen burners 38, 38 are also the same as the angle (θ) shown in Fig. 2. Accordingly, the second set 122 also provides the same effect as that of the second set 22 shown in Figs. 1 and 2.

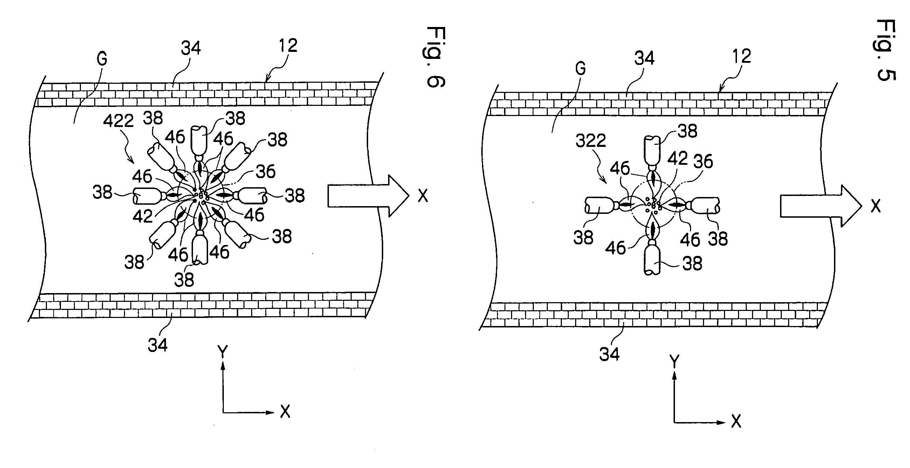

Fig. 4 is a substantial-part plan view of the melting vessel 12 except for ceiling wall, which shows a modified second form of the arrangement of the oxygen combustion burners 38, 38 · · · of the second set, Fig. 5 is a substantial-part plan view showing a third form in the same manner, and Fig. 6 is a substantial-part plan view showing a fourth form in the same manner.

The oxygen combustion burners 38, 38 · · · in the second sets 222, 322 and 422 shown in Figs. 4 to 6 are arranged concentrically around the glass cullet piece input tube 36 with a predetermined distance. In the second set 222 of Fig. 4, three oxygen combustion burners 38, 38, 38 are arranged with a predetermined distance, in the second set 322 of Fig. 5, four oxygen combustion burners 38, 38 · · · are arranged with a predetermined distance, and in the second set 422 of Fig. 6, eight oxygen combustion burners 38, 38 · · · are arranged with a predetermined distance. Particularly, the second sets 322 and 422 of Figs. 5 and 6 each has four oxygen combustion burners 38, 38 · · · arranged along X and Y directions, and the second set 422 of Fig. 6 has addition four oxygen combustion burners 38, 38 · · · arranged between the above four oxygen combustion burners 38, 38 · · · .

Here, the angle of the flame direction of each of the oxygen combustion burners 38, 38 · · · is the same as the angle (θ) shown in Fig. 2.

With the second sets 222, 322 and 422 shown in Figs. 4 to 6, each of the glass cullet pieces 42, 42 · · · falling from the glass cullet piece input tube 36 is heated by high heat of a plurality of oxygen combustion burners 38, 38 · · · arranged around the tube. Accordingly, there is a merit that each pieces is sufficiently heated and the ratio of liquidized portions of liquid glass particles (b) based on the volume of the glass cullet pieces right after input (hereinafter referred to as melting ratio) increases.

As described above, although it is not necessary to completely liquidize the glass cullet pieces 42 in the second gas phase portion, but by thus arranging a plurality of oxygen combustion burners 38, 38 · · · , the melting ratio of the glass cullet pieces 42 improves, and it is possible to reduce heat amount required for secondary heating for homogenizing molten glass liquid. Further, by increasing the number of oxygen combustion burners 38, it becomes possible to uniformly heat the glass cullet pieces 42, 42 · · · and thereby to further increase the melting ratio. Here, when the number of oxygen combustion burners 38 is large, each of the oxygen combustion burners 38 may be ones of small-capacity type. By this construction, it is possible to save the fuel to be used for each oxygen combustion burner 38.

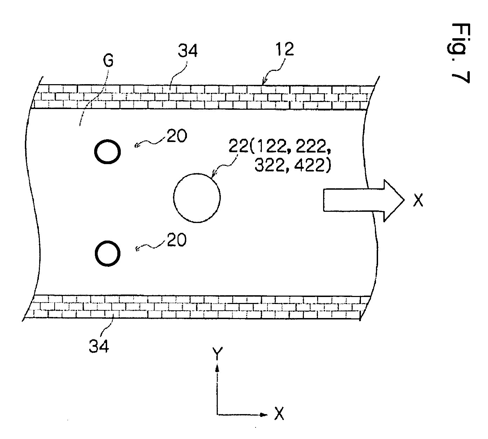

Fig. 7 is a substantial-part plan view of the melting vessel 12 of the first form except for the ceiling wall, which shows the arrangement of the first sets 20 and the second set 22 (122, 222, 322, 422). In Fig. 7, five types of the second set 22 (122 to 422) are indicated by the ○ mark, which indicates that the five types of embodiments can be applied in the arrangement of Fig. 7. Further, the first sets 20, 20 are also each indicated by a ○ mark.

In the form of Fig. 7, two first sets 20, 20 are arranged along a direction Y substantially perpendicular to the flow direction of molten glass liquid G, and one second set 22 (122 to 422) is disposed on the downstream side of the first sets. Further, the second set 22 (122 to 422) is disposed between the first sets 20, 20 when it is observed from the flow direction X of molten glass liquid G.

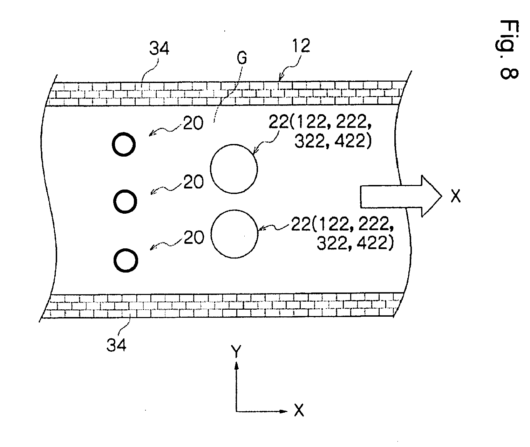

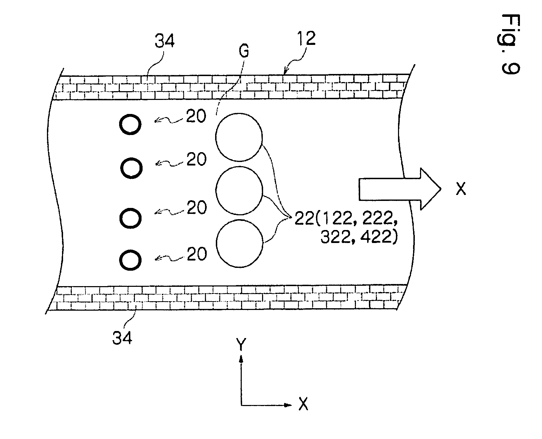

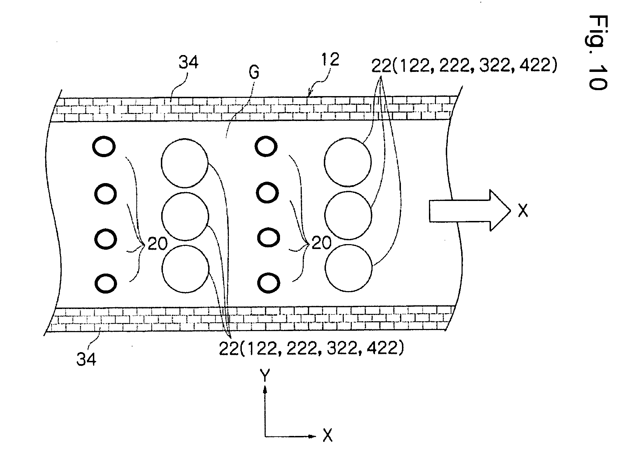

Fig. 8 is a substantial-part plan view of a second form of the melting vessel 12 except for a ceiling portion, which shows the arrangement of the first sets 20 and the second sets 22 (122 to 422), Fig. 9 is a substantial-part plan view of a third form of the melting vessel 12 except for a ceiling wall in the same manner, and Fig. 10 is a substantial-part plan view of a fourth form of the melting vessel 12 except for a ceiling wall in the same manner.

In the second form shown in Fig. 8, three first sets 20, 20, 20 are arranged along the direction Y with a predetermined interval, and on their downstream side, two second sets 22 (122 to 422) are arranged along Y direction. Further, the two second sets 22 (122 to 422) are disposed between the first sets 20, 20 when they are observed from the flow direction X of the molten glass liquid G.

In the third form shown in Fig. 9, four first sets 20, 20 · · · are arranged along Y direction with a predetermined interval, and on their downstream side, three second sets 22 (122 to 422) are arranged along Y direction. Further, the three second sets 22 (122 to 422) are disposed between the first sets 20, 20 when they are observed from the flow direction X of the molten glass liquid G.

In the fourth form shown in Fig. 10, two third forms shown in Fig. 9 are disposed in parallel on the upstream side and the downstream side.

In the second to fourth forms shown in Figs. 8 to 10, a plurality of first sets 20, 20 · · · and a plurality of second sets 22 (122 to 422) are provided and these first sets 20, 20 · · · and the second sets 22 (122 to 422) are arranged in a staggered layout in plan view.

The melting vessel 12 of each of second to fourth forms is suitable for the construction of a large-scale melting furnace for producing hundreds of tons of glass products per day. Namely, in order to realize a mass-production type glass-melting furnace 10, it is necessary to increase the input amount of glass raw material particles 32 and glass cullet pieces 42. However, if it is attempted by a single first set 20 and a single second set 22, the input load per each set increases and the heating efficiency of the glass raw material particles 32 and the glass cullet pieces 42 drastically decreases, which may cause fall of the in-furnace temperature and the temperature of molten glass.

To cope with this problem, in the melting vessel 12 of each of the second to fourth forms, a plurality of first sets 20, 20 · · · and a plurality of second sets 22 (122 to 422) are arranged to reduce input load per each set to maintain the heating efficiency of the glass raw material particles 32 and the glass cullet pieces 42 and to prevent drop of in-furnace temperature and the temperature of molten glass liquid G to thereby achieve a mass-production type melting vessel 12.

Further, in the melting vessel 12 or each of the second to fourth forms, the first sets 20, 20 · · · and the second sets 22 (122 to 422) are arranged in a staggered layout in plan view, which provides the following effects.

Namely, liquid glass particles (a) formed in a first gas phase portion underneath the first set 20 are slightly different from liquid glass particles (b) formed in a first gas phase portion under the second set 22 (122 to 422) in the quality since they are different in the thermal history. Both of these liquid glass particles are finally mixed to form a homogeneous molten glass liquid G, but by arranging the first set 20 and the second set 22 (122 to 422) in a staggered layout, mixing of the liquid glass particles smoothly occurs to reduce inhomoginity in the molten glass liquid G. Further, by arranging a plurality (2 rows in the Figure) of the groups each consisting of the first sets 20, 20 · · · and the second set 22 (122 to 422) arranged in a staggered layout as shown in the fourth form shown in Fig. 10, it is possible to further reduce inhomoginity of the molten glass liquid G.

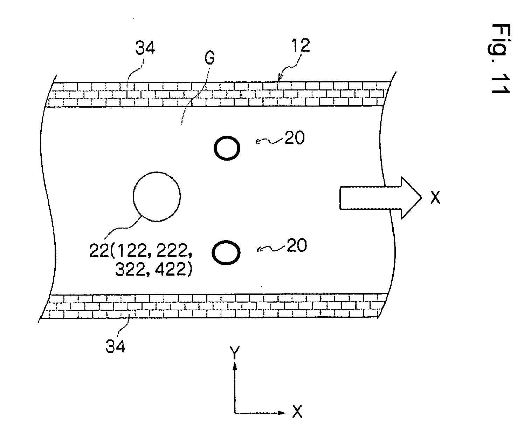

Fig. 11 is a substantial-part plan view of the fifth form of the melting vessel 12 except for the ceiling wall, which shows the arrangement of the first set 20 and the second set 22 (122 to 422).

In the melting vessel 12 shown in the Figure, two first sets 20, 20 are disposed along Y direction, and one second set 22 (122 to 422) is disposed on the upstream side of the first set.

By the way, the melting vessel 12 has a characteristic of inevitably taking away the heat of the molten glass liquid G through the furnace wall to lower the temperature of the molten glass liquid G. Accordingly, when the second set 22 (122 to 422) that cannot completely melt the glass cullet pieces 42 is disposed on the upstream side of the first set 20 as shown in Fig. 11, the heat of the liquid glass particles (b) is taken away by a furnace wall on the upstream side of the melting vessel 12, whereby liquefaction of the glass cullet pieces 42 delays in some cases.

On the other hand, when the first set 20 that can completely melt the glass raw material particles 32 on the upstream side of the second set 22 (122 to 422) as the first to fourth forms shown in Figs. 7 to 10, since a large amount of completely melted molten glass liquid G is present on the upstream side, even if the heat is taken away by a furnace wall on the upstream side, there is no problem in liquefaction of the glass raw material particles 32.

Further, by disposing the second set 22 (122 to 422) on the downstream side, the liquid glass particles (b) are sufficiently heated by the molten glass liquid G, that is produced by accumulating a large amount of liquid glass particles (a) and flowing from the upstream side, and the liquid glass particles (b) are mixed in the molten glass liquid G. By such a feature, the second set 22 (122 to 422) is preferably disposed on the downstream side of the first set 20 rather than its upstream side.

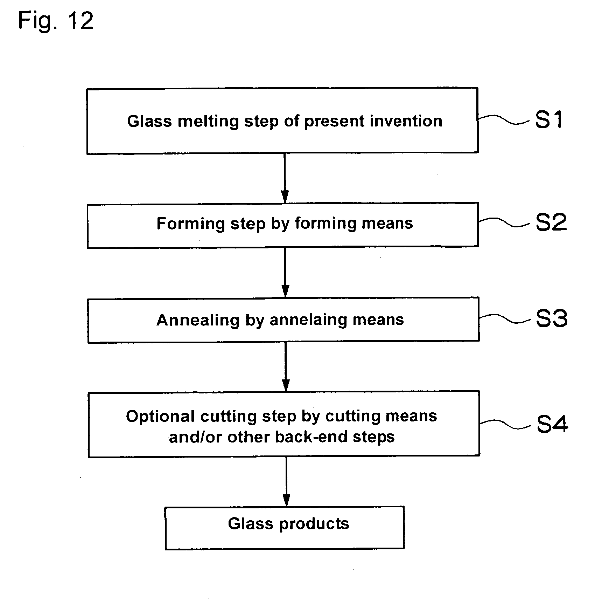

Fig. 12 is a flowchart showing the embodiment of the process for producing glass products. Fig. 12 shows constituent features of the process for producing glass products, that are a glass melting step (S1) by the process for producing molten glass of the present invention, a forming step (S2) by a forming means, an annealing step (S3) by an annealing means, and a cutting step and other back-end steps (S4) to be carried out as the case requires.

A molten glass liquid G produced in Figs. 1 and 2 is conveyed through a conduit structure, not shown, to a forming means and is formed (forming step). The formed glass is annealed by an annealing means (annealing step) to prevent residual stress from remaining inside a solidified glass after formation. Further, the glass is cut (cutting step) and subjected to other back-end steps as the case requires, to be glass products.

For example, in a case of plate glass, the molten glass liquid G is formed into a glass ribbon by a forming means, it is annealed by an annealing means and cut into a desired size, and is subjected to a back-end step such as a grinding step of glass ends to obtain a plate glass.

The molten glass liquid G produced by the glass melting method of the present invention, is not limited in the glass composition. Accordingly, it may be soda lime glass or borosilicate glass. Further, the application of the glass products to be produced is not limited to architecture and vehicle applications, and it may be flat panel display application or other various types of applications.

In a case of soda lime glass to be used for a plate glass for architecture or vehicle application, the glass preferably has a composition that SiO₂ : 65 to 75%, Al₂O₃: 0 to 3%, CaO: 5 to 15%, MgO: 0 to 15%, Na₂O: 10 to 20%, K₂O: 0 to 3%, Li₂O: 0 to 5%, Fe₂O₃: 0 to 3%, TiO₂: 0 to 5%, CeO₂: 0 to 3%, BaO: 0 to 5%, SrO: 0 to 5%, B₂O₃: 0 to 5%, ZnO: 0 to 5%, ZrO₂ 0 to 5%, SnO₂: 0 to 3%, and SO₃: 0 to 0.5% in terms of mass percentage of oxide.

In a case of alkali-free glass to be employed for a substrate of liquid crystal display, the glass preferably has a composition that SiO₂: 39 to 70%, Al₂O₃: 3 to 25%, B₂O₃: 1 to 20%, MgO: 0 to 10%, CaO: 0 to 17%, SrO: 0 to 20% and BaO: 0 to 30% in terms of mass percentage of oxide.

In a case of mixed alkali glass to be employed for a substrate for plasma display, the glass preferably has a composition that SiO₂: 50 to 75%, Al₂O₃: 0 to 15%, MgO+CaO+SrO+BaO+ZnO: 6 to 24% and Na₂ O+K₂ O: 6 to 24% in terms of mass percentage of oxide.

As another application, in a case of a borosilicate glass to be used for e.g. a heat-resistant container or laboratory equipment, the glass preferably has a composition that SiO₂: 60 to 85%, Al₂O₃: 0 to 5%, B₂O₃: 5 to 20% and Na₂O+K₂O: 2 to 10% in terms of mass percentage of oxide.

In this embodiment, explanation has been made under an assumption that a plurality of first sets are arranged with a predetermined interval along a direction Y substantially perpendicular to the flow direction X of molten glass liquid G, but the construction is not limited thereto, and the first sets may be arranged along an oblique direction to Y direction or arranged in a curve shape or zigzag shape etc.

In this embodiment, explanation has been made under an assumption that a plurality of the second sets are arranged with a predetermined interval along a direction Y substantially perpendicular to the flow direction X of molten glass liquid G, but the construction is not limited thereto, and the second sets may be arranged along an oblique direction to Y direction, or arranged in a curve shape or zigzag shape etc.

In this embodiment, explanation has been made under an assumption that the heating means for forming the first gas phase portion and the glass cullet piece input tube are disposed downwardly in vertical direction, but the construction is not limited thereto, and they may be disposed obliquely so long as they are disposed downwardly.

In the present invention, explanation has been made under an assumption that both of the first sets and the second sets are provided in the ceiling portion of the glass-melting furnace, but the construction is not limited thereto, and it is sufficient that both of them are present in a furnace wall portion in the upper portion of the glass-melting furnace. For example, the construction may be such that the first set is provided in the ceiling portion of the glass-melting furnace and the second set is provided from the side wall of the glass-melting furnace.

In the present invention, explanation has been made under an assumption that the ceiling face of the glass-melting furnace has a flat shape, but the construction is not limited thereto, and it may have an arch shape, a dome shape, etc.

### INDUSTRIAL APPLICABILITY

Molten glass produced by the present invention is formed into various types of glass products by a forming means such as a float bath, a fusion forming machine, a roll out forming machine, a blow forming machine or a press-forming machine.

The entire disclosure of Japanese Patent Application No. 2009-154026 filed on June 29, 2009 including specification, claims, drawings and summary is incorporated herein by reference in its entirety.

### REFERENCE SYMBOLS

10 · · · glass-melting furnace, 12 · · · melting vessel, 14 · · · outlet (discharge portion), 18 · · · ceiling wall, 20 · · · first set, 22, 122, 222, 322, 422 · · · second set, 24 · · · upstream side wall face, 26 · · · oxygen combustion burner, 28 · · · nozzle, 30 · · · flame, 32 · · · glass raw material particles, 34 · · · side wall, 36 · · · glass cullet piece input tube, 38 · · · oxygen combustion burner, 40 · · · glass cullet piece input port, 42 · · · glass cullet pieces, 44 · · · nozzle, 46 · · · flame, 50 · · · furnace bottom portion

## Claims

1. A process for producing molten glass, which is a process of changing glass raw material particles into liquid glass particles in a gas phase atmosphere in a glass melting furnace and accumulating the liquid glass particles in a bottom portion of the glass melting furnace to obtain a molten glass liquid, the process comprising supplying glass cullet pieces having a short diameter (A) of 0.5 mm<A<30 mm into an in-furnace gas phase atmosphere outside a gas phase atmosphere wherein the glass raw material particles are changed into liquid glass particles, and making the glass cullet pieces into glass particles at least surfaces of which are liquidized in the gas phase atmosphere, and accumulating the glass particles at least surfaces of which are liquidized together with the liquid glass particles produced from the glass raw material particles, to obtain a molten glass liquid.

2. The process for producing molten glass according to Claim 1, wherein the glass cullet pieces having a short diameter (A) are ones captured by a sieve having a mesh-opening size of 0.5 mm and passing through a sieve having a mesh-opening size of 30 mm.

3. A glass-melting furnace for changing glass raw material particles into liquid glass particles in a gas phase atmosphere in the glass melting furnace, accumulating the liquid glass particles to obtain a molten glass liquid and discharging the molten glass liquid;
the furnace comprising a glass raw material particle input portion disposed downwardly from a furnace wall portion in the upper portion of the glass melting furnace;
a glass cullet piece input portion disposed downwardly from a furnace wall portion in the upper portion of the glass melting furnace for inputting glass cullet pieces having a short diameter (A) of 0.5 mm<A<30 mm;
a heating means for forming a first gas phase portion under the glass raw material particle input portion in the glass melting furnace for changing the glass raw material particles into liquid glass particles;
a heating means for forming a second gas phase portion under the glass cullet piece input portion in the glass melting furnace for melting the glass cullet pieces into glass particles at least surfaces of which are melted;
a furnace bottom portion for accumulating the above two types of glass particles to form a molten glass liquid; and
a discharge portion for discharging the molten glass liquid.

4. The glass melting furnace according to Claim 3, wherein the glass cullet pieces having a short diameter (A) are ones captured by a sieve having a mesh-opening size of 0.5 mm and passing through a sieve having a mesh-opening size of 30 mm.

5. The glass melting furnace according to Claim 3 or 4, wherein the heating means for forming the first gas phase portion and the heating means for forming the second gas phase portion are each an oxygen combustion burner producing an oxygen combustion flame or a multi-phase arc plasma generation apparatus constituted by at least a pair of electrodes producing thermal plasma.

6. The glass melting furnace according to any one of Claims 3 to 5, wherein the heating means for forming the second gas phase portion is an oxygen combustion burner and the oxygen combustion burner is disposed obliquely so that the angle (θ) of flame direction becomes 1°≦θ≦75° to the downward glass cullet piece input axis of the glass cullet piece input portion.

7. The glass melting furnace according to any one of Claims 3 to 6, wherein the heating means for forming the second gas phase portion is a plurality of oxygen combustion burners and the oxygen combustion burners are disposed around the glass cullet piece input portion in a ceiling portion being the furnace wall portion in the upper portion of the furnace.

8. The glass melting furnace according to Claim 7, wherein the plurality of oxygen combustion burners are disposed concentrically around the glass cullet piece input portion with a predetermined interval.

9. The glass melting furnace according to any one of Claims 3 to 8, wherein the glass raw material particle input portion and the glass cullet piece input portion are disposed at different positions along the flow direction of the molten glass liquid along which the molten glass liquid accumulated in the furnace bottom portion flows toward the discharge portion.

10. The glass melting furnace according to any one of Claims 3 to 9, wherein a plurality of the glass raw material particle input portions are disposed along a direction substantially perpendicular to the flow direction of the molten glass liquid along which the molten glass liquid accumulated in the furnace bottom portion flows toward the discharge portion.

11. The glass melting furnace according to Claim 10, wherein the plurality of glass raw material particle input portions are disposed along a direction substantially perpendicular to the flow direction of the molten glass liquid so as to form a column of the plurality of glass raw material particle input portions, and a plurality of such columns are disposed at different positions along the flow direction of the molten glass liquid.

12. The glass melting furnace according to any one of Claims 9 to 11, wherein one or a plurality of the glass cullet piece input portions are disposed along a direction substantially perpendicular to the flow direction of the molten glass liquid along which the molten glass liquid accumulated in the furnace bottom portion flows toward the discharge portion, a plurality of the glass cullet piece input portions are disposed along the flow direction of the molten glass liquid, and the glass cullet piece input portions are disposed along the flow direction of the molten glass liquid at positions different from the position of the glass raw material particle input portion.

13. An apparatus for producing glass products, comprising the glass melting furnace as defined in any one of Claims 3 to 12, a forming means for forming a molten glass, which is provided on the downstream side of the discharge portion of the glass melting furnace, and an annealing means for annealing the formed glass.

14. A process for producing glass products, comprising a glass melting step of producing molten glass by the melting method of glass as defined in Claim 1 or 2, a step of forming the molten glass and a step of annealing the formed glass.
